# EUROPEAN PATENT SPECIFICATION

(11) **EP 2 641 031 B1**
(45) Date of publication and mention of the grant of the patent: **03.12.2014**
(21) Application number: 11805252.1
(22) Date of filing: 15.11.2011
(51) Int. Cl.: F24J 2/20, F28F 3/12

(54) **HEAT EXCHANGER OF THE PLATE TYPE**
PLATTENWÄRMETAUSCHER
ÉCHANGEUR DE CHALEUR DE TYPE À PLAQUES

(30) Priority: 16.11.2010 NO 20101613; 16.11.2010 US 414165 P
(43) Date of publication of application: 25.09.2013
(73) Proprietor: Hiform AS, 1684 Vesterøy (NO)
(72) Inventor: HANSEN, Pål Francis, N-1684 Vesterøy (NO)
(74) Representative: Fluge, Per Roald
(86) International application number: PCT/NO2011/000320
(87) International publication number: WO 2012/067517

(56) References cited:
- GB-A- 2 413 176
- US-A- 4 227 514
- US-A- 4 228 851
- US-A- 4 346 695
- US-A- 4 473 066
- US-A- 4 858 594
- US-A1- 2004 255 932

## Description

The present invention is a heat exchanger of a structurally self-supporting plate type provided with an internal fluid passage between a first and a second plate (2, 3) whereof at least the first of the plates (2) is arranged to be exposed to a warmer or colder medium.

### Background art

Swedish patent SE 533035 shows a heat exchange element of the plate type, with an internal fluid flow passage comprising two plates between an inlet and an outlet, and an interior passage that forms an extension between the inlet and outlet, where the passage is constrained between two parallel plates that are formed by a self-supporting polymer material. The two plates are joined with a number of point weldings distributed over the fluid passage area.

A disadvantage of the Swedish patent is that the point welding process results in a quite flat surface. Such a flat surface reflects sunlight from the plate, particularly when the angle of the sun is inclined. An inclined sun angle also provides a small exposed area and a large degree of reflection. Another disadvantage is that the point weldings easily detach when the fluid is pressurized, incurring delamination of the plates.

US4473066 to Clark describes a so-called sun energy collector which is a panel with several flow channels formed as a multi-layered corrugated panel with manifolds for inlet and outlet. The flow channels are stacked convex channels.

US4858594 to McCurdy describes a sun heating panel with a series of flow channels formed as a two-layer corrugated panel with manifolds for inlet and outlet, and wherein the flow channels in addition to provide convex channels in their cross-section also are provided with indentations in the channel walls in order to induce turbulence in the flow channels so as for bringing more of the liquid in contact with the sun exposed surfaces inner face.

US4346695 to Kitzmiller flow channels with convex channels in their cross sections, wherein the underlying and overlying plates are convex towards the same face direction of the base plane. The parts of the plates which are in the base plane are plane.

US4473066 describes a heat transfer panel employed as a solar energy collector. The panel includes a flow channel defining structur formed as a corrugated sheet and a superimposed flexible membrane to which manifolds are secured. The manifolds have mating corrugated surfaces that are interengaged with the corrugation on the panel sheet to provide transverse rigidity.

US4346695 describes a solar heat exchanger in a frame and bottom with an insulation layer, and channels spaced throughout the frame. The channels may be arranged in a serpentine or manifold design and may comprise an outer curved wall and an inner curved wall whering water flows through the inner and outer curved wall and spaced between the inner and outer curved wall in a restricted manner. Inlet and outlet means are provided within the frame to allow cooler water to enter the exchanger and warmer water to exit.

US4858594 describes a solar panel having a curvilinear flow passageway through which a fluid flows to be heated by solar energy, comprising a top sheet with a plurality of upwardly protruding convex upper-portions shaped to reflect a portion of incident energy from the sun to adjacent upper-portions, and a bottom sheet sealingly engaging the top sheet and having a like plurality of upwardly protruding convex lower-portions which underlie a corresponding one of the upper-portions, and protrude upwardly into such upper-portions of the top sheet thereby defining a hollow space therebetween which has a crescent-shaped cross-section, wherein the hollow spaces thereby formed are interconnected to form the flow channel. Undulations, protuberations or depressions are further provided along the length of the flow channel to introduce turbulence in the fluid flow to increase the rate of heat exchange between the solar heating panel and the fluid.

GB2413176 describes a heat collection apparatus comprising heat capture means mountable to a building or other structure comprising flexible plastics film means defining channel means, means to pass fluid through said channel means so as to absorb heat into the fluid, and means to deliver said heated fluid for use, storage or heat exchange.

US4227514 describes a housing made of rigid insulating material such as polyurethane moulded in one single piece and coated with a radiation and water resistant coating. The open top through is enclosed by an outer transparent cover made of glass or impact resistant polymer sheet, and rests on a ridge or plateau formed in the trough. A plurality of parallel channels extend along the length of the trouch. A black fluid serves as the absorber and heat carrier of the collector and flows through the channels.

US4228851 describes a solar heating panel which is formed from two corrugated plastic sheets joined face to face to form multiple passageways therethrough for flow of a fluid medium. Each of the components is generally rectangular with the corrugations having diverging sidewall portions spaced by transverse wall portions and with the sidewall portions of opposing components in parallel overlapping and containing relation and the transverse wall portions spaced apart and forming passageways therebetween.

US2004/0255932 describes a solar panel for water-heater of the type comprising a heat exchanger made of moulded synthetic material, having a plurality of passages in which a heat-exchanging fluid can circulate and a translucent cover sheet attached to the exchanger with a clearance, wherein the heat exchanger constitutes the brace supporting the panel and consists of two identical half-shells furnished with parallel longitudinal central projecting ribs and one projecting edging rib of greater dimension than a central rib, the two half-shells being bonded or heat sealed so that the central ribs define the passages and that the respective edging ribs define a sealed hollow edging frame with insulating air confined on the periphery of the exchanger.

### Brief summary of the invention

The invention is a heat exchanger of a structurally self-supporting plate type and provided with an internal flow passage (6) constrained between a first and a second plate (2, 3) and extending between an inlet (4) and an outlet (5),
- wherein said flow passage (6) is subdivided in multiple generally parallelly directed longitudinally extending channels (7),
- said longitudinally extending channels (7) having continuous joints (8) formed by said two plates (2, 3),
- said longitudinally extending channels (7) having an arch-shaped cross-section,
- wherein said arch-shape of said plates (2, 3) of said channels (7) is in the same face direction orthogonal to said plates, characterized in that
- said parallelly running longitudinally extending channels (7) comprise several laterally directed arches relative to their main axis in their longitudinal extension, and said continuous joints (8) comprise many laterally directed kinks relative to their main axis measured in their longitudinal direction, said channels being zigzag-shaped,
- the cross-section of one channel (7) in one section plane partially overlaps a cross-section of another channel (7) in another section plane

The arc-shape is preferably in the direction of the desired exposed face.

In an advantageous embodiment of the invention the exposed plate (2) is formed in a heat conductive material, which increases the efficiency if the heat exchanger is used e.g. as a "sunlight collector".

In an advantageous embodiment of the invention the second pate (3) is thermally insulated to reduce heat loss if the heat exchanger should increase the temperature of the through flowing fluid, or to control the heat loss towards only one side of the heat exchanger, if it is a wall installed radiator for heating in a house.

### Advantages of the invention

An advantage of the crescent-shape of the cross-section of the channels (7) is that a ratio of exposed surface area to volume of contained liquid is high, thus it has a large exposed area relative to the weight. This is an advantage if the panel is to be mounted as roof panels on a roof to collect sunlight, or if mounted as ceiling panels without having to increase the dimensions of existing girders.

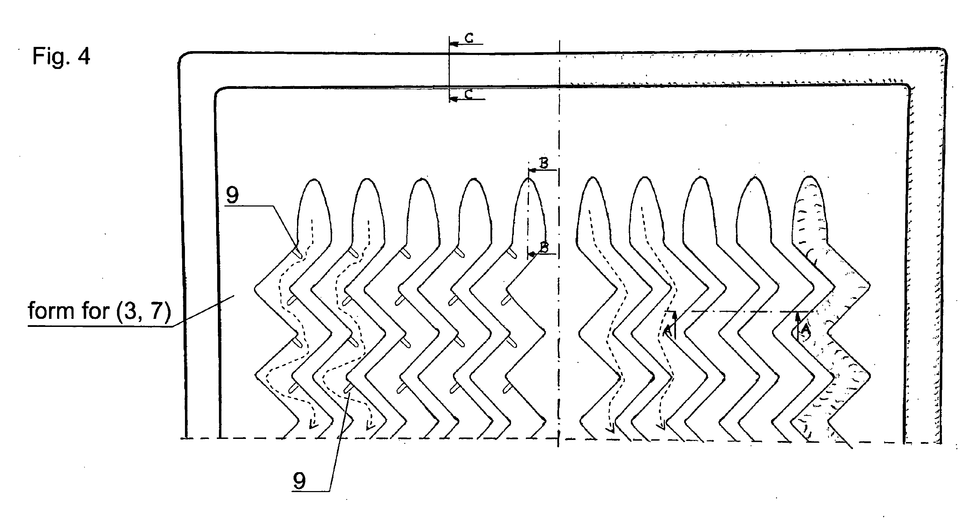

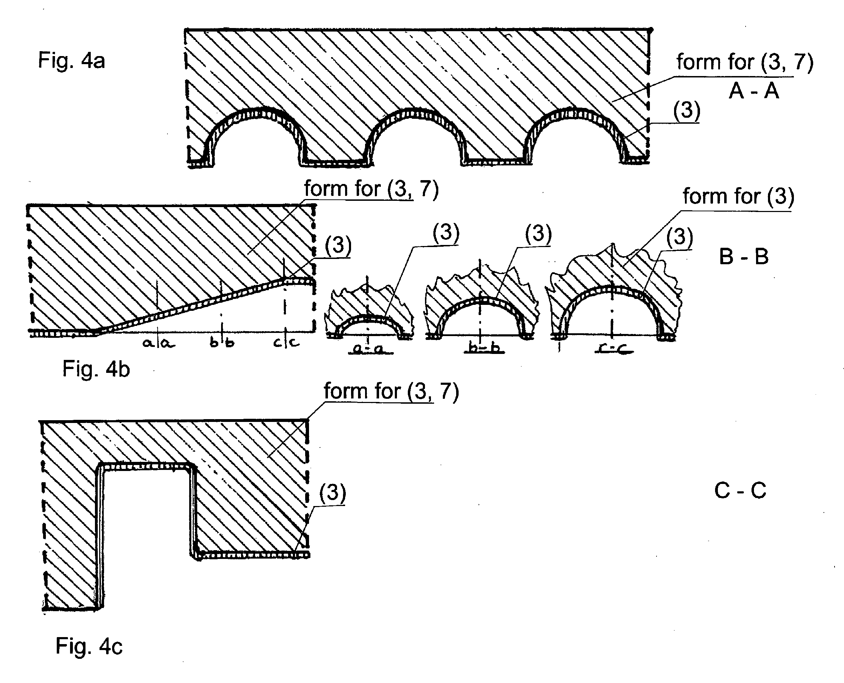

The feature that the generally parallelly running longitudinally extending channels (7) comprise several laterally directed arches kinked about 45 degrees relative to their main axis in their longitudinal extension, please see Fig. 4, will make the cross-section of one channel (7) in one section plane partially overlap a cross-secticn of another channel (7) in another section plane, thus increasing the panel's bending stiffness about the general longitudinal axis of the channels. Further, a kink angle of 45 degrees is a good compromise to allow several parallelly running channels.

In an embodiment of the invention the longitudinally extending channels (7) have a corrugated surface generally across the longitudinal direction. This create microturbulence in the through flowing fluid, which promotes heat transfer from the wall to the contained through flowing liquid or vice versa, which is an advantage.

The feature of the continuous joints (8) between those two plates (2, 3) forming a long zig-zag pattern at either sides of each channel (7) will result in a large joint area between the two plates (2, 3). This will allow a higher liquid pressure before delaminating than for the point-welded heat exchange element shown in SE 533035 wherein the two plates are joined with a number of point weldings distributed over the fluid passage area, which has a far lower welding area than for the present invention, and which may not withstand much liquid internal pressure.

The feature that in the cross-section of the channel (7) both the lower and the upper plate will form a bridge structure, and that the contained liquid sets up an internal liquid pressure between the upper and lower plate will make the structure form a small bridge which will counteract bending down of the structure.

### Short figure caption

The invention is illustrated in the attached drawing figures, wherein
Figure 1 is a section through a portion of a heat exchanger according to the invention with an inlet (or outlet) shown in the left part of the drawing, and wherein the channels extend from a manifold (4a (5a)) towards the right. A transparent cover is arranged on top of the heat exchanger, and a frame structure is shown to the left side of the drawing.
Figure 2 is a simplified section through a first and a second plate of the heat exchanger, wherein channels are formed between those two arc-shaped sections of the first and the second plate.
Figure 3 shows a plane view and details of a mould for the first plate.
Figure 4 shows a plane view and details of a casting mould for the second plate.
Figure 5 is a simplified section through the first, second, and a third plate of a combined heat exchanger embodiment of the invention.
Figs. 6a and 6b are photographic images of an embodiment of the invention wherein the generally parallel longitudinally directed channels (7) are separated by continuous joints (8) preferably
comprising many laterally directed arcs or kinks relative to their main axis in the longitudinal direction. The channels (7) are wavy or zigzag - shaped.

### Description of the embodiment of the invention

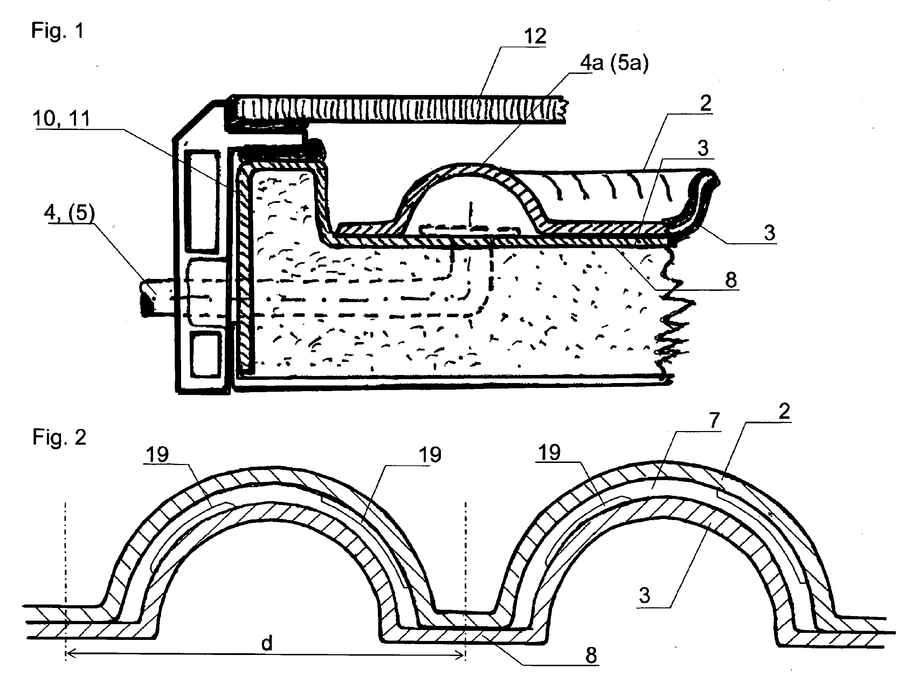

The invention is a heat exchanger of the plate type, please see Fig. 1, provided with an internal fluid passage for water or other liquid, comprising a first and a second plate (2, 3) whereof at least the first of the plates (2) is arranged to be exposed to a warmer or colder medium. The fluid may be water or another liquid such as antifreeze solution with a high heat capacity. An antifreeze solution will be advantageous in case of outdoor use in a climate with a risk of temperatures below zero degrees Celsius. The internal passage (6) between the two plates (2, 3) is constrained by manifolds (4a, 5a) to an inlet (4) and an outlet (5) for the fluid. The passage (6) forms a widening between the inlet (4) and outlet (5) in that it branches into several channels (7). The internal passage (6) is constrained between those two generally parallel plates (2, 3) and wherein the first and the second plate (2, 3) are formed in a structurally self-supporting polymer material.

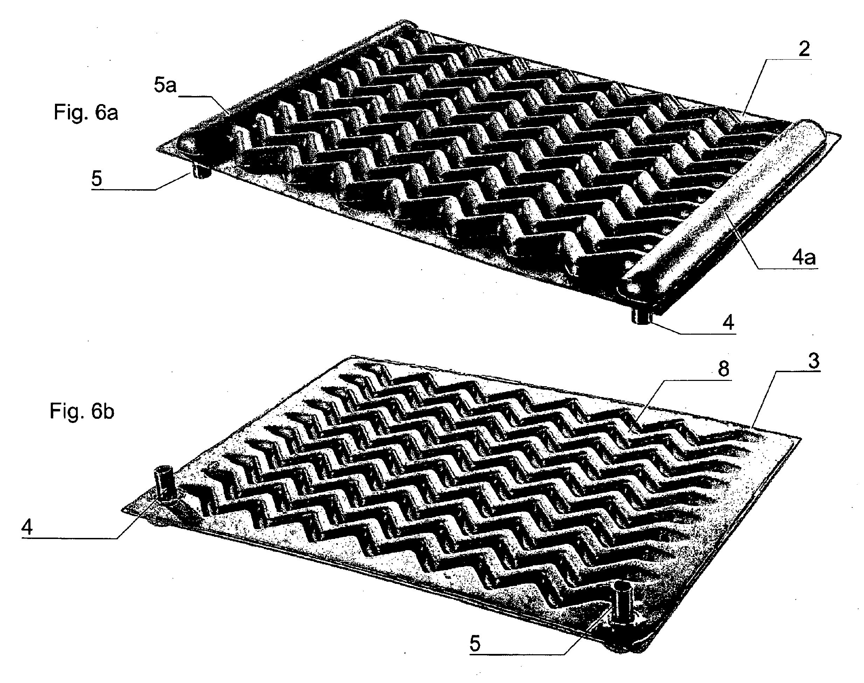

In an advantageous embodiment there is arranged an inlet manifold (4a) between said inlet (4) and said channels (7). Between said channels (7) and said outlet (5) is and is an outlet manifold (4b), please see Figs. 6a and 6b, and Fig. 1.

The passage is subdivided into a number of generally parallelly directed longitudinal channels (7) separated by continuous junctions (8) between two plates (2, 3) please see figure 2. The longitudinal channels extend between the inlet (4) and outlet (5). The longitudinal channels have an arc-shaped cross-section. This will significantly increase the surface area of the exposed plate and thereby increase the heat transmission. The arc-shape of the plates (2, 3) in the channels (7) are to the same face side relative to the plate in order to reduce the volume of fluid residing inside the channels (7). This enhances the ratio between the exposed area and the volume of the present fluid significantly, increasing the heat exchanger's efficiency relative to the volume it occupies.

In a advantageous embodiment of the invention, the exposed plate (2) is formed in a heat conductive material which increases the efficiency if the heat exchanger is used for example as a "sunlight collector".

In an advantageous embodiment of the invention the second plate (3) is thermally insulated in order to reduce heat loss if the heat exchanger shall increase the temperature of the through flowing liquid or to control the heat loss only to one side of the heat exchanger, if it is a wall installed radiator for heating in a house.

According to an embodiment of the invention, the second plate (3) is formed in a thermally conductive material. This is to increase the heat loss if the heat exchanger is used for reducing the temperature of the flowing through liquid, for example, used as a cooler, or used in a tank or in the ground to heat up the surroundings.

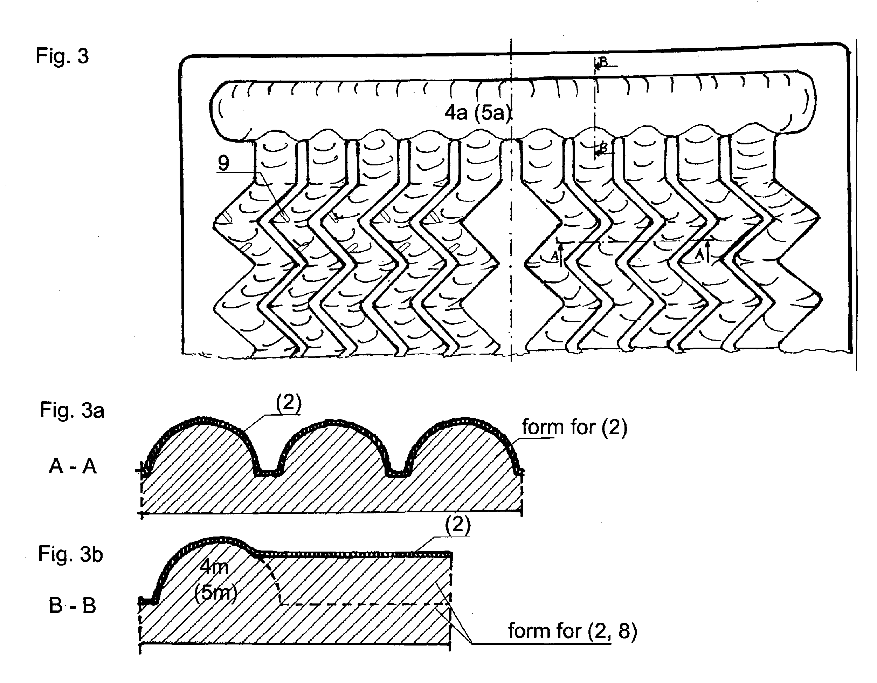

The generally parallel longitudinally directed channels (7) are separated by continuous joints (8) comprising many laterally directed arcs or kinks relative to their main axis in the longitudinal direction, i.e. that the channels (7) are wavy or zigzag - shaped, please see the drawings of moulds for the formation of the first and the second plates shown respectively in Fig. 3 and Fig. 4. This embodiment is shown in Fig. 6a and 6b. In a preferred embodiment, the moulds are vacuum moulds. The feature of the continuous joints (8) between those two plates (2, 3) in a long zig-zag pattern at either sides of each channel (7) will result in a long joint length and thus a large joint area between the two plates (2, 3). This will allow a liquid pressure of more than 5 Bar before delaminating.

The moulds are in an embodiment of the invention made by cutting the mould using a computer controlled milling machine. The milling cutter may be run at intervals of 0.5 mm resulting in a slightly corrugated surface of the mould. This slightly corrugated surface of the mould results in that the longitudinally extending channels (7) have a corrugated surface generally across the longitudinal direction. This creates microturbulence in the through flowing fluid.

In an embodiment of the invention, one of the plates (2, 3) may have a surrounding rim (10) formed as a self-supporting structural frame (11). This frame may be arranged for bracketing of the plates (2, 3) and for constituting an independent, self supporting structure or for being installed in a building structure. The surrounding rim (10) will provide a more precise positioning of the plates (2, 3) relative to each other so as for obtaining the desired shape of the channels (7).

In a preferred embodiment, e.g. for mounting on a roof as part of a solar collector, at least the first of the plates (2) is covered by a transparent cover (12). The transparent cover (12) may be of glass. In a preferred embodiment of the invention it may be formed of toughened glass, preferably of low iron content. It is important that the transparent cover has little absorption of solar radiation. The transparent cover (12) may alternatively be formed of a polymer material such as polycarbonate, PET (polyethylene teraphthalate), acrylic or a similar transparent polymer material.

In a preferred embodiment of the invention the polymer material of the first and second plate (2, 3) is ABS, polypropylene, PET, or epoxy. This is because these materials are easy to vacuum form. They also have a low weight and low price.

It may be advantageous that the first plate (2) has a high thermal conductivity. Therefore, the polymer material in at least the first plate (2) preferably comprises carbon or CNT (carbon nanotube) reinforced polymer material. This is also to increase the mechanical strength. For carbon reinforcement in the polymer one may use carbonized bamboo particles which are strongly absorbing for infrared radiation and also thermally conductive.

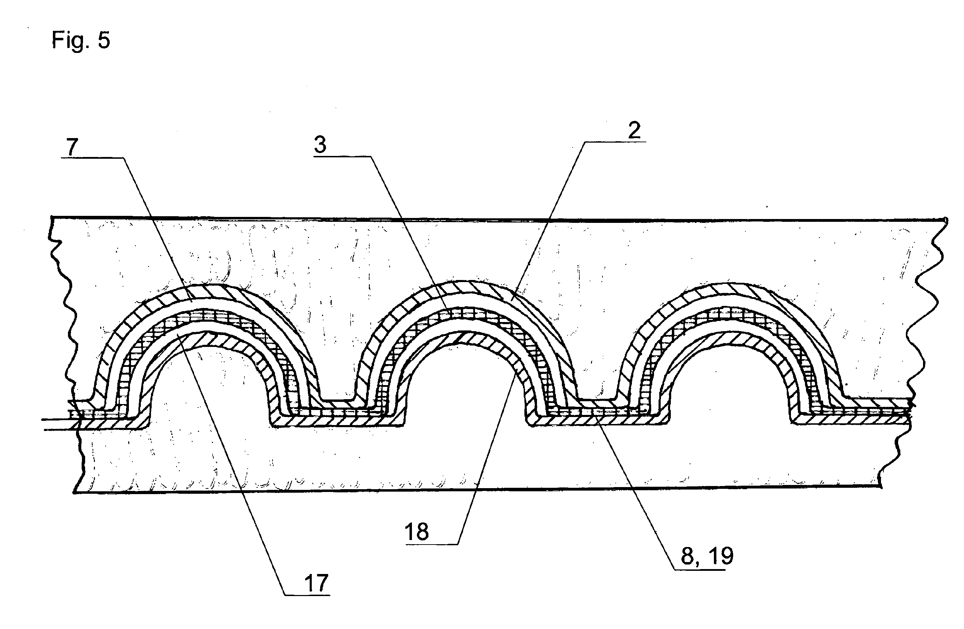

The heat exchanger according to the invention may also comprise a second passage (16) for a second fluid between a second inlet (24) and a second outlet (25) which are formed by arranging a third plate (17) below the second plate (3), wherein the second passage (16) is subdivided into a number of generally parallelly directed longitudinal second channels (18) extending along the first elongated channels (7), separated by continuous joints (19) between the second and the third plate (2 , 3) and extending along the continuous joints (8). Thus there a liquid - liquid heat exchanger is formed. Such an embodiment is indicated in a cross-section in Figure 5. In an advantageous embodiment according to the invention, the heat exchanger is arranged as a counter flow heat exchanger, ie, the first inlet (4) is near the second outlet (25), and the first outlet (5) is by the second inlet (24).

In an advantageous embodiment according to the invention, please see Fig. 5, the second channels (18) are formed to have an arc-shaped cross-section corresponding to the cross section of the first channels (7), in that the third plate (17) is curved towards the same face as the second and the first plates (2, 3). In this embodiment it would be a significant advantage if the plate (3) is formed in a heat conductive material. The material of the plate (3) may be added CNT or other heat conductivity increasing additives.

In an advantageous embodiment of the invention, low notches (9) are made in one or both of the moulds, please see Fig. 4, so as for forming generally low, inward protruding transverse notches (19) in part of the channels' (7) cross-sections, please see Fig. 2. Such formed low notches (19) in the channels will form constrictions which will redirect part of the liquid flow around them and create more turbulence. This turbulence will counteract laminar flow of the liquid and generally increase the heat transfer from the walls (2, 3) to the liquid, or vice versa.

If used as a heat exchanger under the waterline on a boat hull, one or both of the plates (2, 3) are preferably covered by an antifouling agent.

## Claims

1. A heat exchanger of a structurally self-supporting plate type and provided with an internal flow passage (6) constrained between a first and a second plate (2, 3) and extending between an inlet (4) and an outlet (5),
- wherein said flow passage (6) is subdivided in multiple generally parallelly directed longitudinally extending channels (7),
- said longitudinally extending channels (7) having continuous joints (8) formed by said two plates (2, 3),
- said longitudinally extending channels (7) having an arch-shaped cross-section,
- wherein said arch-shape of said plates (2, 3) of said channels (7) is in the same face direction orthogonal to said plates, **characterized in that**
- said parallelly running longitudinally extending channels (7) comprise several laterally directed arches relative to their main axis in their longitudinal extension, and said continuous joints (8) comprise many laterally directed kinks relative to their main axis measured in their longitudinal direction, said channels being zigzag-shaped,
- the cross-section of one channel (7) in one section plane partially overlaps a cross-section of another channel (7) in another section plane.

2. The heat exchanger according to claim 1, wherein the second plate (3) is thermally insulated.

3. The heat exchanger according to any of the preceding claims 1, wherein said second plate (3) is formed in a thermally conductive material.

4. The heat exchanger according to any of the preceding claims, wherein said longitudinally directed channels (7) have a corrugated surface generally across said longitudinal direction.

5. The heat exchanger according to claim 1, wherein one of said plates (2, 3) has a surrounding rim (10) formed as a self-supporting structural frame (11).

6. The heat exchanger according to claim 1 or 5, wherein at least said first of said plates (2) is covered by a transparent cover (12).

7. The heat exchanger according to claim 6, wherein said transparent cover (12) is glass, preferably toughened glass with low iron content.

8. The heat exchanger according to claim 6, wherein said transparent cover (12) is made in a polymer material such as polycarbonate, polyethylene teraftalate, or acrylic.

9. The heat exchanger according to claim 1, wherein the material in said first and second plate (2, 3) is ABS, polypropylene, PET, or epoxy.

10. The heat exchanger according to claim 1, wherein said material in said first plate (2) is carbon fiber or carbon nanotube - reinforced.

11. The heat exchanger according to claim 10, wherein said carbon fibre reinforcement in said polymer material comprises carbonized bamboo particles.

12. The heat exchanger according to any of the preceding claims, wherein a second passage (16) for a second fluid from a second inlet (24) and a second outlet (25) is formed by arranging a third plate (17) below the second plate (3), wherein the second passage (16) is subdivided into a number of generally parallelly directed longitudinal second channels (18) extending along the first longitudinal channels (7), separated by continuous joints (19) between the second and the third plate (2 , 3) and extends along the continuous joints (8).

13. The heat exchanger according to claim 12, wherein it is arranged counter flow, i.e. the first inlet (4) is by the second outlet (25), and the first outlet (5) is by said second inlet (24).

14. The heat exchanger according to claim 12, wherein said second channels (18) have a arc-shaped cross-section corresponding to said cross section of the first channels (7), in that said third plate (17) is curved to the same side as said second and the first plate (2, 3).

15. The heat exchanger according to any of the preceding claims, wherein the exposed plate (2) is formed of a heat conductive material.

16. The heat exchanger according to any of the preceding claims, further provided with low, inward protruding generally transverse notches (19) in part of the channels' (7) cross-sections.

17. The heat exchanger according to any of the preceding claims, wherein between said inlet (4) and said channels (7) is an inlet manifold (4a) and between said channels (7) and said outlet (5) is an outlet manifold (4b).

## Patentansprüche

1. Wärmetauscher einer strukturell selbsttragenden Plattenart und versehen mit einem inneren Stromdurchgang (6), der zwischen einer ersten und einer zweiten Platte (2, 3) beschränkt ist und zwischen einem Einlass (4) und einem Auslass (5) verläuft,
- wobei der Stromdurchgang (6) in mehrere, im Allgemeinen parallel gerichtete, längs verlaufende Kanäle (7) unterteilt ist,
- wobei die längs verlaufenden Kanäle (7) fortlaufende Verbindungsstellen (8) aufweisen, die durch die zwei Platten (2, 3) ausgebildet sind,
- wobei die längs verlaufenden Kanäle (7) einen bogenförmigen Querschnitt aufweisen,
- wobei die Bogenform der Platten (2, 3) der Kanäle (7) in derselben Flächenrichtung senkrecht zu den Platten verläuft,
**dadurch gekennzeichnet, dass**
- die parallel laufenden, längs verlaufenden Kanäle (7) mehrere seitlich gerichtete Bögen bezüglich ihrer Hauptachse in ihrer Längenausdehnung umfassen und die fortlaufenden Verbindungsstellen (8) zahlreiche seitlich gerichtete Knicke bezüglich ihrer Hauptachse gemessen in ihrer Längenausdehnung umfassen, wobei die Kanäle zickzackförmig sind,
- der Querschnitt eines Kanals (7) in einer Schnittebene einen Querschnitt eines anderen Kanals (7) in einer anderen Schnittebene teilweise überdeckt.

2. Wärmetauscher nach Anspruch 1, wobei die zweite Platte (3) thermisch isoliert ist.

3. Wärmetauscher nach einem der vorhergehenden Ansprüche, wobei die zweite Platte (3) in einem thermisch leitenden Material ausgebildet ist.

4. Wärmetauscher nach einem der vorhergehenden Ansprüche, wobei die längs gerichteten Kanäle (7) im Allgemeinen über die Längsrichtung hinweg eine gewellte Oberfläche aufweisen.

5. Wärmetauscher nach Anspruch 1, wobei eine der Platten (2, 3) einen Umgebungsrand (10) aufweist, der als selbsttragender struktureller Rahmen (11) ausgebildet ist.

6. Wärmetauscher nach einem der Ansprüche 1 oder 5, wobei zumindest die erste der Platten (2) durch eine transparente Abdeckung (12) abgedeckt ist.

7. Wärmetauscher nach Anspruch 6, wobei die transparente Abdeckung (12) Glas, vorzugsweise vorgespanntes Glas mit niedrigem Eisengehalt, ist.

8. Wärmetauscher nach Anspruch 6, wobei die transparente Abdeckung (12) aus Polymermaterial, wie etwa Polycarbonat, Polyethylenterephthalat oder Acryl, hergestellt ist.

9. Wärmetauscher nach Anspruch 1, wobei das Material in der ersten und zweiten Platte (2, 3) ABS, Polypropylen, PET oder Epoxid ist.

10. Wärmetauscher nach Anspruch 1, wobei das Material in der ersten Platte (2) kohlenstofffaser- oder kohlenstoffnanoröhrenverstärkt ist.

11. Wärmetauscher nach Anspruch 10, wobei die Kohlenstofffaserverstärkung im Polymermaterial karbonisierte Bambuspartikel umfasst.

12. Wärmetauscher nach einem der vorhergehenden Ansprüche, wobei ein zweiter Durchgang (16) für ein zweites Fluid von einem zweiten Einlass (24) zu einem zweiten Auslass (25) durch Anordnen einer dritten Platte (17) unter der zweiten Platte (3) ausgebildet ist, wobei der zweite Durchgang (16) in eine Anzahl im Allgemeinen parallel gerichteter, zweiter Längskanäle (18), verlaufend entlang der ersten Längskanäle (7), unterteilt ist, durch fortlaufende Verbindungsstellen (19) zwischen der zweiten und der dritten Platte (2, 3) getrennt ist und entlang der fortlaufenden Verbindungsstellen (8) verläuft.

13. Wärmetauscher nach Anspruch 12, wobei Gegenstrom angeordnet ist, d.h. der erste Einlass (4) durch den zweiten Auslass (25) ist und der erste Auslass (5) durch den zweiten Einlass (24) ist.

14. Wärmetauscher nach Anspruch 12, wobei die zweiten Kanäle (18) einen bogenförmigen Querschnitt aufweisen, der dem Querschnitt der ersten Kanäle (7) entspricht, wobei die dritte Platte (17) zur selben Seite wie die zweite und die erste Platte (2, 3) gekrümmt ist.

15. Wärmetauscher nach einem der vorhergehenden Ansprüche, wobei die freigelegte Platte (2) aus einem wärmeleitenden Material ausgebildet ist.

16. Wärmetauscher nach einem der vorhergehenden Ansprüche, ferner versehen mit niedrigen, einwärts vorstehenden, im Allgemeinen quer verlaufenden Kerben (19) in einem Teil der Querschnitte der Kanäle (7).

17. Wärmetauscher nach einem der vorhergehenden Ansprüche, wobei zwischen dem Einlass (4) und den Kanälen (7) ein Einlassverteiler (4a) ist und zwischen den Kanälen (7) und dem Auslass (5) ein Auslassverteiler (4b) ist.

## Revendications

1. Échangeur de chaleur dont la structure est de type à plaques autoporteuses et pourvu d'un passage d'écoulement interne (6) contraint entre des première et deuxième plaques (2, 3) et s'étendant entre une entrée (4) et une sortie (5),
- dans lequel ledit passage d'écoulement (6) est subdivisé en de multiples canaux s'étendant longitudinalement (7) orientés de manière globalement parallèle,
- lesdits canaux s'étendant longitudinalement (7) ayant des joints continus (8) formés par lesdites deux plaques (2, 3),
- lesdits canaux s'étendant longitudinalement (7) ayant une coupe transversale en forme d'arc,
- dans lequel ladite forme d'arc desdites plaques (2, 3) desdits canaux (7) est dans la même direction de face orthogonale auxdites plaques,
**caractérisé en ce que**
- lesdits canaux s'étendant longitudinalement et de manière parallèle (7) comprennent plusieurs arcs orientés latéralement par rapport à leur axe principal dans leur extension longitudinale, et lesdits joints continus (8) comprennent de nombreux plis orientés latéralement par rapport à leur axe principal mesurés dans leur direction longitudinale, lesdits canaux étant en forme de zigzag,
- la coupe transversale d'un canal (7) dans un plan de coupe chevauche partiellement une coupe transversale d'un autre canal (7) dans un autre plan de coupe.

2. Échangeur de chaleur selon la revendication 1, dans lequel la deuxième plaque (3) est thermiquement isolée.

3. Échangeur de chaleur selon l'une des revendications précédentes 1, dans lequel ladite deuxième plaque (3) est formée dans un matériau thermiquement conducteur.

4. Échangeur de chaleur selon l'une des revendications précédentes, dans lequel lesdits canaux orientés longitudinalement (7) ont une surface ondulée globalement sur toute ladite direction longitudinale.

5. Échangeur de chaleur selon la revendication 1, dans lequel l'une desdites plaques (2, 3) a un bord périphérique (10) formé sous la forme d'un cadre structurel autoporteur (11).

6. Échangeur de chaleur selon la revendication 1 ou 5, dans lequel au moins ladite première plaque desdites plaques (2) est recouverte d'un couvercle transparent (12).

7. Échangeur de chaleur selon la revendication 6, dans lequel ledit couvercle transparent (12) est en verre, de préférence en verre trempé avec une faible teneur en fer.

8. Échangeur de chaleur selon la revendication 6, dans lequel ledit couvercle transparent (12) est réalisé en un matériau polymère tel qu'un polycarbonate, un polyéthylènetéréphtalate, ou un acrylique.

9. Échangeur de chaleur selon la revendication 1, dans lequel le matériau dans lesdites première et deuxième plaques (2, 3) est de l'ABS, du polypropylène, du PET, ou de l'époxy.

10. Échangeur de chaleur selon la revendication 1, dans lequel ledit matériau dans ladite première plaque (2) est un matériau renforcé par des fibres de carbone ou par des nanotubes de carbone.

11. Échangeur de chaleur selon la revendication 10, dans lequel ledit renforcement par des fibres de carbone dans ledit matériau polymère comprend des particules de bambou carbonisées.

12. Échangeur de chaleur selon l'une des revendications précédentes, dans lequel un deuxième passage (16) pour un deuxième fluide à partir d'une deuxième entrée (24) et d'une deuxième sortie (25) est formé par agencement d'une troisième plaque (17) en dessous de la deuxième plaque (3), où le deuxième passage (16) est subdivisé en un certain nombre de deuxièmes canaux longitudinaux orientés de manière globalement parallèle (18) s'étendant le long des premiers canaux longitudinaux (7), séparés par des joints continus (19) entre les deuxième et troisième plaques (2, 3) et s'étendant le long des joints continus (8).

13. Échangeur de chaleur selon la revendication 12, dans lequel il est agencé à contre-courant, c'est-à-dire la première entrée (4) est près de la deuxième sortie (25), et la première sortie (5) est près de ladite deuxième entrée (24).

14. Échangeur de chaleur selon la revendication 12, dans lequel lesdits deuxièmes canaux (18) ont une coupe transversale en forme d'arc correspondant à ladite coupe transversale des premiers canaux (7), où ladite troisième plaque (17) est incurvée vers le même côté que lesdites deuxième et première plaques (2, 3).

15. Échangeur de chaleur selon l'une des revendications précédentes, dans lequel la plaque exposée (2) est formée d'un matériau conducteur de chaleur.

16. Échangeur de chaleur selon l'une des revendications précédentes, pourvu en outre d'encoches basses globalement transversales faisant saillie vers l'intérieur (19) dans une partie des coupes transversales des canaux (7).

17. Échangeur de chaleur selon l'une des revendications précédentes, dans lequel un collecteur d'entrée (4a) se trouve entre ladite entrée (4) et lesdits canaux (7) et un collecteur de sortie (4b) se trouve entre lesdits canaux (7) et ladite sortie (5).
